# EUROPEAN PATENT SPECIFICATION

(11) **EP 0 838 757 B1**
(45) Date of publication and mention of the grant of the patent: **10.09.2003**
(21) Application number: 97117284.6
(22) Date of filing: 06.10.1997
(51) Int. Cl.: G06F 9/46

(54) **Process scheduler**
Prozessablaufsteuerung
Planificateur de processus

(30) Priority: 25.10.1996 GB 9622264; 19.11.1996 GB 9624007
(43) Date of publication of application: 29.04.1998
(73) Proprietor: Fujitsu Services Limited, London, EC2A 1SL (GB)
(72) Inventor: Miller, Kevin, Stockport, Cheshire, SK4 4EG (GB)
(74) Representative: Guyatt, Derek Charles

(56) References cited:
- EP-A- 0 527 301
- EP-A- 0 527 392
- EP-A- 0 658 841
- KEITH A. SMITH: "Scheduling In Real Time For UNIX Operating Systems" COMPUTER TECHNOLOGY REVIEW, vol. 9, no. 16, January 1990, LOS ANGELES, CA, US, pages 16-17, XP000096004
- T. W. BUTLER: "The UNIX System V Operating System Gets New Features" AT&T TECHNOLOGY, vol. 5, no. 1, 1990, NEW YORK, US, pages 20-25, XP000127803

## Description

### Background to the Invention

This invention relates to a scheduling mechanism for scheduling processes in a computer. The invention is particularly, although not exclusively, concerned with process scheduling in a Unix environment.

In any computer running a varied and heavy workload, it is important to schedule the workload correctly, so that consistent throughput and response time are maintained. However, it is generally accepted within the industry that the standard Unix SVR4 scheduler is not wholly satisfactory in this respect.

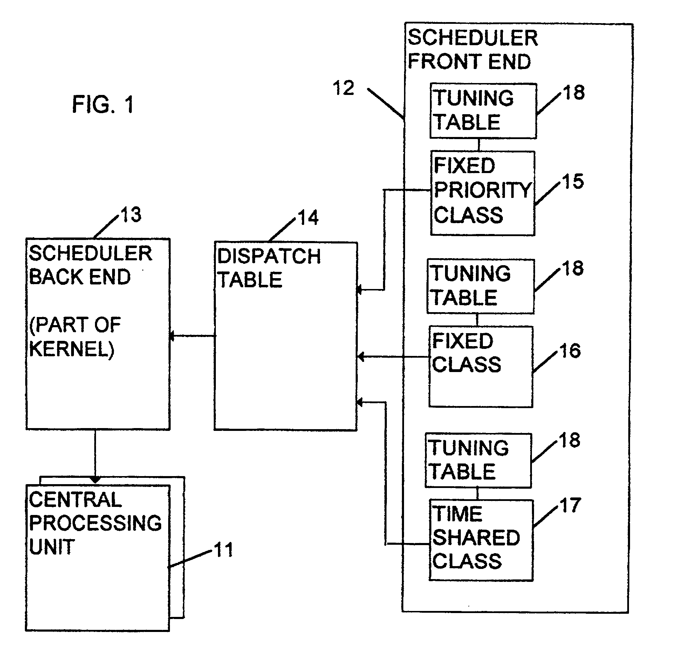

Figure 1 is a schematic diagram showing a computer with a typical Unix SVR4 scheduling mechanism.

The computer comprises one or more central processing units (CPUs) 11, and a scheduler comprising a front-end 12, a back-end 13, and a dispatch table 14. The CPUs run a number of concurrent processes, and the function of the scheduler is to decide which of the processes is to run on which of the CPUs at any given time.

The dispatch table 14 holds a queue of runnable processes, arranged in order of priority.

The scheduler back-end 13 is part of the kernel. It performs all the required low level process-to-CPU switching and pre-emption, and knows how many CPUs are available at any given time. The back-end performs the switching of processes on and off the CPUs according to a very simple algorithm: from the dispatch table it always selects the process with the highest priority. The scheduler back-end is fixed in the way it operates and does not admit any enhancement other than by modifying the kernel source code.

The scheduler front-end 12 takes processes that are ready to run, allocates priorities to them, and places them into the dispatch table 14 at positions determined by their priorities. The front-end comprises a set of device drivers 15-17, each of which implements a scheduling algorithm for a particular scheduler class. The scheduling algorithm is different for each class. Every process on the system is assigned to a particular scheduler class and is scheduled according to the algorithm for that class. Standard Unixware provides four classes, as follows:

System Class - Certain critical system processes (eg the swapper daemon) run within this class. It ensures that those processes are scheduled in a timely manner. This is a pseudo class, in that the processes which run within it are pre-defined within the kernel and user processes may not be assigned to it.

Fixed Priority (or Real Time) Class - Processes within this class run at a high priority, which remains fixed regardless of the behaviour of the process. As a result, an errant process can gain exclusive access to a processor and effectively hang the system. This class is used by applications which require predictable response times and guaranteed processor resource; for example video servers or certain industrial process control applications. This class is implemented by the device driver 15.

Fixed Class - This class is similar to the Fixed Priority Class (above), although it is not as dangerous and does not require privilege for a process to enter it. This class is implemented by the device driver 16.

Time Shared Class - By default all user processes (including applications) run within this class. Processes are given fixed processor time-slices: the higher the priority of the process, the shorter the time slice (but the more likely it is to run). Processes which use the whole of their time-slice are punished by having their priority reduced. Conversely, processes which sleep voluntarily are rewarded by having their priority increased when they wake up. This class is implemented by the device driver 17.

Each of these device drivers 15 - 17 has a tuning table 18, containing a set of parameters which modify or control the behaviour of the scheduling algorithm for that class. For example, the parameters include "time-slice duration", and "maximum wait without running before a reschedule". These tuning tables may be updated with new parameter values on a running system by the system administrator. This affords a reasonable degree of control over the behaviour of a particular scheduling class. The Time Shared class is particularly good in this respect: the tuning table contains five parameters adjustable over a range of sixty priorities.

Assigning processes to classes is handled by two Unix commands, **priocntl** and **dispadmin.** Each of these commands consists of a class-independent section of code, which invokes a class-dependent subcommand where necessary. In standard Unix, class-dependent subcommands are provided for each of the Fixed Priority, Fixed, and Time Shared classes.

As already mentioned, each scheduler class is implemented as a Unix device driver. All these device drivers present a common interface to the scheduler back-end. The scheduler architecture has been designed to allow field replacement of existing scheduler classes or the introduction of entirely new classes, requiring only a kernel rebuild and no access to the source code.

As stated above all user processes including applications by default run within the Time Shared class. Hence all these processes are treated equally. Changes made to the Time Shared tuning table affect all processes handled by the Time Shared class: it is not possible to selectively apply changes to some processes and not others. As a result, there is no effective mechanism for communicating to the Time Shared class the relative priorities of the various processes it is scheduling. For example, a critical database process supporting an on-line query service may, from time-to-time, have to compete with a less important mail system postman function. This could result in very variable response times to end users of the on-line service.

One object of the present invention is to provide a way of extending a Unix scheduler in such a way that gives the system administrator much more control over how groups of applications, individual applications or parts of applications are scheduled.

### Summary of the Invention

According to the invention a computer system comprises a scheduler for scheduling a number of processes to run on the system, wherein the scheduler comprises a plurality of identical scheduler classes each of which performs the same scheduling algorithm, each scheduler class having a separate parameter table for independently adjusting the behaviour of that scheduler class.

In a system in accordance with the invention, each process should be allocated to a Policy class according to the nature of its work. The standard SVR4 interface **priocntl** may be used to change the scheduling classes of processes, so as to allocate them to the required Policy classes. However, the task of moving all TS processes to appropriate policy classes at start of day, and making sure that each new process is also correctly assigned, is non-trivial.

In a preferred embodiment of the invention, the system further includes:
(a) a database for associating each process with a particular target scheduler class; and
(b) a policy scheduler monitor for periodically scanning the processes, accessing the database to determine the target scheduler class for each process, and assigning each process to its specified target scheduler class.

It will be seen that this provides a way of automatically allocating processes to scheduling classes, and to make sure that every new process is allocated correctly.

### Brief Description of the Drawings

Figure 1 is a schematic diagram of a computer with a conventional scheduling mechanism.

Figure 2 is a schematic diagram of a computer with an improved scheduling mechanism in accordance with the present invention.

Figure 3 is a schematic diagram showing a policy scheduler monitor for automatically allocating processes to scheduling classes.

Figure 4 is a flow chart of a daemon forming part of the policy scheduler monitor.

### Description of an Embodiment of the Invention

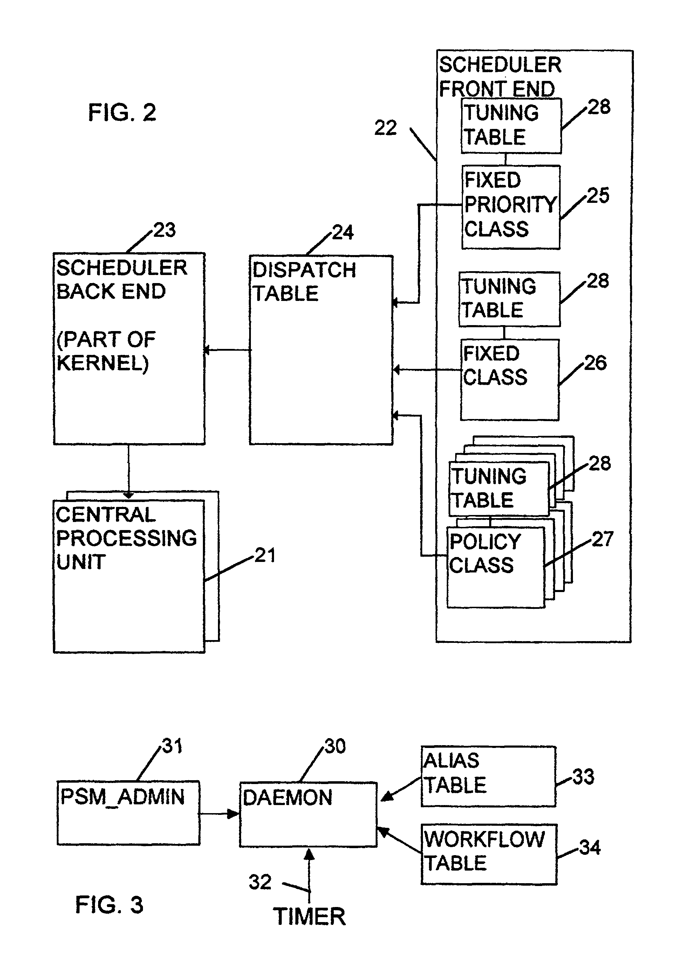

One embodiment of the invention will now be described by way of example with reference to Figures 2 to 4 of the accompanying drawings.

Figure 2 shows a computer comprising one or more central processing units (CPUs) 21 and a scheduler comprising a front-end 22, a back-end 23, and a dispatch table 24.

The scheduler back-end 23, and dispatch table 24 are identical to the standard back-end 13 and dispatch table 14 of Figure 1.

The scheduler front-end 22 comprises a number of device drivers 25-27, each with a tuning table 28. The device drivers 25-26 are identical to the standard device drivers 15-16 for the Fixed Priority and Fixed classes shown in Figure 1. However, in this embodiment, the device driver 17 for the Time Shared class is replaced by ten instances of a device driver 27 which implements a set of classes referred to herein as Policy classes. Each of the Policy class device drivers 27 has the same functionality as the standard Time Shared class device driver 17, but the Policy class device drivers 27 are uniquely identified and distinguished from the standard scheduler device drivers by the names "PC0" to "PC9".

The ten Policy class device drivers 27 therefore all operate according to the same scheduling algorithm. However, since each has its own tuning table, the multiple Policy classes can be individually tuned to provide a range of different scheduling behaviours, or policies, to which processes can be assigned. Preferably, the Policy class device drivers are delivered pretuned to provide a range of scheduling behaviours.

### Policy Scheduler Monitor

Each process should be allocated to one of the ten Policy classes according to the nature of its work. For example, there will be Policy classes for low priority background tasks, logged-in terminals, TP monitors, critical database processes and so on. Assignment of processes to classes is handled by a mechanism referred to herein as the policy scheduler monitor.

Referring to Figure 3, the policy scheduler monitor comprises a daemon 30 and a **psm_admin** command 31. The daemon 30 is a single-process Unix daemon. It is invoked once at start-of-day, and then periodically in response to timer interrupts 32. By default, the timer interrupts are set to occur every five seconds, but this may be adjusted by a call to the **psm_admin** command. The daemon is also woken up, when required, to service requests from **psm_admin.** The daemon makes use of a database consisting of two tables: an alias table 33 and a workmix table 34.

The alias table 33 contains a number of entries, each of which contains the fields: PATH and MNEMONIC. PATH is a Unix path name which identifies a particular executable program, and may contain wildcard characters, such as "*" and "?". MNEMONIC is a name which is used to link this table to the workmix table. For example, the alias table might include the following entries:

| PATH | MNEMONIC |
|---|---|
| /usr/sbin/sh | shell |
| /bin/ksh | shell |
| /usr/local/bin/bash | shell |
| /bin/csh | Cshell |
| home/apps/payroll/bin/DB∗ | payrollDB |
| home/apps/payroll/bin/client | payrollClients |
| home/apps/payroll/bin/∗ | payrollMisc |

In this example, the mnemonic name "shell" is associated with a number of shells **sh, ksh** and **bash.** The mnemonic "payrollDB" is associated (using the "*" wildcard character) with a number of payroll database processes, which all start with "DB". Payroll client processes are given the mnemonic "payrollClients", while all other payroll processes are given the mnemonic "payrollMisc".

The workmix table contains a number of entries, each of which contains the fields: MNEMONIC, UID/GID, and CLASS. UID/GID consists of "I:" followed by a Unix user ID, or "G:" followed by a Unix Group ID, and may include wildcard characters. CLASS identifies one of the ten Policy classes PC0-PC9. For example, the workmix table corresponding to the above alias table might contain the following entries:

| MNEMONIC | UID/GID | CLASS |
|---|---|---|
| shell | U:jbloggs | PC2 |
| shell | U:* | PC1 |
| Cshell | G:finance | PC2 |
| Cshell | U:* | PC1 |
| payrollClients | U:* | PC3 |
| payrollMisc | U: | PC2 |
| payrollDB | U: | PC5 |

It can be seen that, in this example:
- Most users of the shells **sh, ksh,** and **bash** run in policy class PC1, except for the user "jbloggs", which runs in policy class PC2.
- Similarly, most users of **C-Shell** run in PC1, except for users in the "finance" group, which run in PC2.
- Payroll servers run in PC5, payroll clients in PC3, and the rest of the payroll suite in PC2.

Typically, the alias table will be relatively static, and the workmix table will be changed more frequently. Preferably, more than one version of the workmix table is provided, to allow different assignments of processes to policy classes to be selected. For example, one workmix table may be used for prime time operation, and another for overnight operation, so as to handle the different work mixes expected at these times.

### Daemon

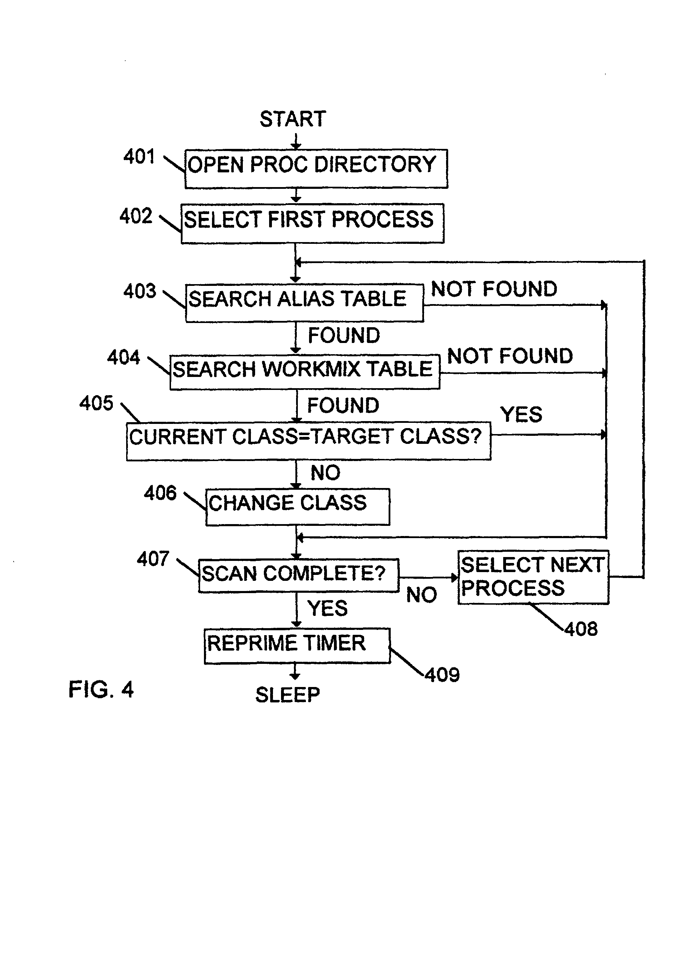

As mentioned, the daemon 30 is invoked once at start-of-day, and then periodically in response to the timer interrupts. Each time the daemon runs, it scans the current processes in the system, to check whether each process is currently running in the correct scheduler class, as specified by the alias and workmix tables. At start-of-day, the daemon scans all the current processes in the system. On subsequent runs, however, it scans only a subset of the processes, up to a predetermined maximum number, typically 1000. This ensures that the overhead imposed by running the daemon is kept to a reasonable level, typically no more than 2% of the total workload of the system. Figure 4 shows the operation of the daemon 30.

(Step 401) The daemon first opens the Unix **proc** directory, which contains details of all the current processes in the system, and reads the entries in this table.

(Step 402) The daemon selects the first process to be examined in the current scan. If the previous scan performed by the daemon was incomplete, then the selected process is the one following the last process selected in the previous scan. Otherwise, the daemon selects the lowest-numbered valid process in the system. The following information is obtained about the selected process from the proc directory:
UID - the identity of the user who started the process.
COMD - the command line that started the process.

(Step 403) The daemon searches the alias table, looking for an entry whose PATH field matches the COMD value of the selected process. If a matching entry is found, its MNEMONIC field is read, and the daemon proceeds to step 404 below; otherwise, it skips to step 407.

(Step 404) The daemon then searches the workmix table, looking for an entry whose MNEMONIC field matches the MNEMONIC obtained from the alias table, and whose UID/GID field matches the match the UID value of the selected process. If a matching entry is found, its CLASS field is read, and the daemon proceeds to step 405 below; otherwise, it skips to step 407.

(Step 405) The daemon compares the CLASS field read from the workmix table with the policy class to which the selected process is currently assigned. If they are not equal, the daemon proceeds to step 406 below; otherwise, it skips to step 407.

(Step 406) The daemon calls the Unix **priocntl** command, to change the scheduler class of the selected process to the required Policy class.

(Step 407) The daemon checks whether the current scan is now complete. This will be the case if either:
- all valid processes have now been scanned; or
- the predetermined maximum number of processes have been processed during the current scan.

(Step 408) If the current scan is not yet complete, the daemon selects the next process from the **proc** directory, and returns to step 403.

(Step 409) If the current scan is complete, the daemon re-primes the timer channel to specify when the next timer interrupt is required, and then goes to sleep.

It should be noted that the daemon scans the alias and workmix tables until it finds a match. Thus, if there is more than one potential match in a table, only the first is selected. For example, in the alias table above, the path name
home/apps/payroll/bin/DBupdate would match both of the entries:
home/apps/payroll/bin/DB* payrollDB
home/apps/payroll/bin/* payrollMisc.
In this case, only the first entry would be selected.

### psm_admin

The **psm_admin** command is a shell interface, which enables the system administrator to configure the daemon 30. This command provides a number of options including the following:
- -S: Adds an entry to the **inittab** file, causing the daemon to start.
- -X: Causes the daemon to exit tidily, and removes the **inittab** entry. This option may be used, for example, to configure out the daemon while the alias and workmix files are being set up or modified.
- -f: Causes the daemon to re-read the alias and workmix files.
- -r: Causes the daemon to check the state of all processes on the system, using in-store copies of the current alias and workmix files.
- -R: Causes the daemon to re-read the filestore copies of the alias and workmix files and to perform a full rescan.
- -t: Causes the daemon to rescan every n seconds, where n is the value of a supplied parameter.

### Some possible modifications

It will be appreciated that many modifications may be made to the system described above without departing from the scope of the present invention. For example, different numbers of Policy classes could be provided. Also, although the invention has been described in the context of Unix SVR4, it will be appreciated that it could also be used in other environments.

In another possible modification, instead of replicating the code for the Policy class device drivers, these device drivers may be replaced by stubs which point to a single device driver that provides the actual functionality for the Policy classes.

## Claims

1. A computer system comprising a scheduler (23) for scheduling a number of processes, **characterised in that** the scheduler comprises a plurality of scheduler classes (27) each of which performs the same scheduling algorithm, each scheduler class having a separate parameter table (28) for independently adjusting the behaviour of that scheduler class.

2. A computer system comprising a scheduler (23) for scheduling a number of processes, wherein the scheduler comprises a plurality of scheduler classes (25,26) each of which performs a different scheduling algorithm, **characterised in that** the scheduler also comprises a plurality of further scheduler classes (27) each of which performs the same scheduling algorithm, each of said further scheduler classes having a separate parameter table (28) for independently adjusting the behaviour of that scheduler class.

3. A computer system according to Claim 1 or 2 wherein each of the scheduler classes is implemented as a device driver.

4. A computer system according to any preceding claim, further comprising:
(a) a database (33,34) for associating each process with a particular target scheduler class; and
(b) a policy scheduler monitor (30) for periodically scanning the processes, accessing the database to determine the target scheduler class for each process, and assigning each process to its specified target scheduler class.

5. A system according to Claim 4 wherein the policy scheduler monitor first checks each process to determine whether it is currently assigned to its target scheduler class, and assigns that process to the target scheduler class only if it is not already so assigned.

6. A system according to Claim 4 or 5 wherein said database comprises:
(a) a first table (33) which associates processes with mnemonic names; and
(b) a second table. (34) which associates each of the mnemonic names with a particular target scheduler class.

7. A system according to Claim 6 wherein the first table (33) contains wildcard characters which enable a number of different processes to be associated with a particular mnemonic name.

8. A system according to Claim 6 or 7 wherein the first table (33) identifies each process by its path name.

9. A system according to any one of Claims 6 to 8 wherein said second table (34) also associates each target scheduler class with a particular user or group identity.

10. A system according to any one of Claims 6 to 9 including a plurality of alternative instances of said second table (34).

## Patentansprüche

1. Rechnersystem mit einer Prozessablaufsteuerung (23) zur Steuerung einer Anzahl von Prozessen, **dadurch gekennzeichnet, daß** die Ablaufsteuerung eine Mehrzahl von Ablaufsteuerungsklassen (27) aufweist, deren jede den gleichen Ablaufsteuerungs-Algorithmus ausführt, wobei jede Ablaufsteuerungsklasse eine getrennte Parameter-Tabelle (28) zum unabhängigen Einstellen des Verhaltens dieser Ablaufsteuerungsklasse besitzt.

2. Rechnersystem mit einer Ablaufsteuerung (23) zur Steuerung einer Anzahl von Prozessen, wobei die Ablaufsteuerung eine Mehrzahl von Ablaufsteuerungs-Klassen (25, 26) aufweist, von denen jede einen anderen Ablaufsteuerungs-Algorithmus ausführt, **dadurch gekennzeichnet, daß** die Ablaufsteuerung ferner eine Mehrzahl von weiteren Ablaufsteuerungs-Klassen (27) umfaßt, von denen jede den gleichen Ablaufsteuerungs-Algorithmus ausführt, und jede der weiteren Ablaufsteuerungs-Klassen eine getrennte Parameter-Tabelle (28) zur unabhängigen Einstellung des Verhaltens dieser Ablaufsteuerungs-Klasse besitzt.

3. Rechnersystem nach Anspruch 1 oder 2, bei dem jede der Ablaufsteuerungs-Klassen als eine Antriebseinrichtung implementiert ist.

4. Rechnersystem nach einem der vorausgehenden Ansprüche, **gekennzeichnet durch**
(a) eine Datenbank (33, 34), die jedem Prozess eine besondere Ziel-Ablaufsteuerungs-Klasse zuordnet, und
(b) einen Bedienungsweise-Ablaufsteuerungs-Monitor (30) zum periodischen Abtasten der Vorgänge, Zugreifen der Datenbank, um die Ziel-Ablaufsteuerungs-Klasse für jeden Prozess zu bestimmen, und Zuordnen eines jeden Prozesses zur spezifizierten Ziel-Ablaufsteuerungs-Klasse.

5. System nach Anspruch 4, bei dem der Bedienweise-Ablaufsteuerungs-Monitor zuerst jeden Prozess prüft, um zu bestimmen, ob er derzeit seiner Ziel-Ablaufsteuerungs-Klasse zugeordnet ist, und diesen Vorgang der Ziel-Ablaufsteuerungs-Klasse nur zuordnet, wenn er nicht bereits in dieser Weise zugeordnet ist.

6. System nach Anspruch 4 oder 5, bei dem die Datenbank aufweist:
(a) eine erste Tabelle (33), die mnemonische Namen den Prozessen zuordnet, und
(b) eine zweite Tabelle (34), die jedem der mnemonischen Namen einer bestimmten Ziel-Ablaufsteuerungs-Klasse zuordnet.

7. System nach Anspruch 6, bei dem die erste Tabelle (33) Wildcard-Schriftzeichen enthält, die in der Lage sind, eine Anzahl von unterschiedlichen Prozessen einem bestimmten mnemonischen Namen zuzuordnen.

8. System nach Anspruch 6 oder 7, bei dem die erste Tabelle (33) jeden Prozess durch seinen Pfad-Namen identifiziert.

9. System nach einem der Ansprüche 6 - 8, bei dem die zweite Tabelle (34) jede Ziel-Ablaufsteuerungs-Klasse einem bestimmten Nutzer oder einer Gruppen-Identität zuordnet.

10. System nach einem der Ansprüche 6 - 9, mit einer Vielzahl von abwechselnden Fällen der zweiten Tabelle (34).

## Revendications

1. Système d'ordinateur comprenant un planificateur (23) pour planifier un nombre de processus, **caractérisé en ce que** le planificateur comprend une pluralité de classes de planificateur (27) dont chacune réalise le même algorithme de planification, chaque classe de planificateur ayant une table de paramètres (28) pour ajuster indépendamment le comportement de cette classe de planificateur.

2. Système d'ordinateur comprenant un planificateur (23) pour planifier un nombre de processus, dans lequel le planificateur comprend une pluralité de classes de planificateur (25, 26) dont chacune réalise un algorithme de planification différent, **caractérisé en ce que** le planificateur comprend aussi une pluralité d'autres classes de planificateur (27) dont chacune réalise le même algorithme de planification, chacune desdites autres classes de planificateur ayant une table de paramètre séparé (28) pour ajuster séparément le comportement de cette classe de planificateur.

3. Système d'ordinateur selon la revendication 1 ou 2 dans lequel chacune des classes de planificateur est implémentée comme un pilote de dispositif.

4. Système d'ordinateur selon l'une quelconque des revendications précédentes, comprenant en outre :
(a) une base de données (33, 34) pour associer chaque processus à une classe de planificateur cible particulière ; et
(b) un moniteur de planificateur Politique (30) pour balayer périodiquement les processus, pour accéder à la base de données pour déterminer la classe de planificateur cible pour chaque processus, et pour assigner chaque processus à sa classe de planificateur cible spécifiée.

5. Système d'ordinateur selon la revendication 4 dans lequel le moniteur de planificateur Politique contrôle d'abord chaque traitement pour déterminer s'il est assigné actuellement à sa classe de planificateur cible, et assigne ce processus à la classe de planificateur cible seulement s'il n'a pas déjà été ainsi assigné.

6. Système d'ordinateur selon la revendication 4 ou 5 dans lequel ladite base de données comprend :
(a) une première table (33) qui associe des processus avec des noms mnémonique ; et
(b) une seconde table (34) qui associe chacun des noms mnémonique à une classe de planificateur cible particulière.

7. Système d'ordinateur selon la revendication 6 dans lequel la première classe (33) contient des caractères jokers qui permet d'associer à un nombre de différents processus un nom mnémonique particulier.

8. Système d'ordinateur selon la revendication 6 ou 7 dans lequel la première table (33) identifie chaque processus par son nom de chemin.

9. Système d'ordinateur selon l'une quelconque des revendications 6 à 8 dans lequel ladite seconde table (34) associe aussi chaque classe de planificateur cible à une identité d'utilisateur ou de groupe particulier.

10. Système d'ordinateur selon l'une quelconque des revendications 6 à 9 comprenant une pluralité d'exemples alternatifs de ladite seconde table (34).
